(19)

**Europäisches Patentamt**
**European Patent Office**
**Office européen des brevets**

(11)  **EP 2 544 358 B1**

(12)  **EUROPEAN PATENT SPECIFICATION**

(45) Date of publication and mention
of the grant of the patent:
**04.01.2017  Bulletin 2017/01**

(51) Int Cl.:
*H02P 9/00* *(2006.01)*        *H02P 23/04* *(2006.01)*

(21) Application number: **11173259.0**

(22) Date of filing: **08.07.2011**

(54) **Control system for doubly-fed induction machine**

Steuerungssystem für doppelt gespeiste Induktionsmaschine

Système de commande de machine à induction à double alimentation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.01.2013  Bulletin 2013/02**

(73) Proprietor: **ABB Technology Oy**
**00380 Helsinki (FI)**

(72) Inventors:
• **Niiranen, Jouko**
  **00350 Helsinki (FI)**
• **Seman, Slavomir**
  **90480 Nürnberg (DE)**
• **Virtanen, Reijo**
  **01600 Vantaa (FI)**

(74) Representative: **Kolster Oy Ab**
**Iso Roobertinkatu 23**
**PO Box 148**
**00121 Helsinki (FI)**

(56) References cited:
**WO-A1-2006/030183**

• **SEMAN ET AL: "Ride-Through Analysis of Doubly
Fed Induction Wind-Power Generator Under
Unsymmetrical Network Disturbance", IEEE
TRANSACTIONS ON POWER SYSTEMS, IEEE
SERVICE CENTER, PISCATAWAY, NJ, US, vol.
21, no. 4, 1 November 2006 (2006-11-01), pages
1782-1789, XP011149801, ISSN: 0885-8950, DOI:
10.1109/TPWRS.2006.882471**

EP 2 544 358 B1

## Description

FIELD OF THE INVENTION

The present invention relates to doubly-fed machines, and especially to damping of sub-harmonic oscillations of an AC power network by control of doubly-fed machines.

BACKGROUND OF THE INVENTION

Doubly-fed induction machines are used in various generator and motor drives. One such electric machine drive comprising converters is a doubly-fed slip-ring generator configuration whose rotor circuit comprises two converters having a direct voltage intermediate circuit therebetween. One converter is situated electrically between the direct voltage intermediate circuit and a rotor while the other converter is situated electrically between the direct voltage intermediate circuit and an electrical network to be supplied.

Such doubly-fed slip-ring generators are commonly used in wind turbines. Sometimes many of these kinds of wind turbines are located in places where the connection to an electrical network requires a long transmission line. The long line has a considerable inductance that tends to limit transmission of the generated power. It is a common practice to alleviate this problem by using capacitance connected in series with the transmission line. This series compensation of the inductance has, however, the drawback that the capacitor with the inductances of the line and the supplying network form a resonance circuit that has a resonance frequency lower than the nominal frequency (50 or 60 Hz) of the grid.

Excitation of this sub-synchronous resonance causes a rapid variation of the voltage magnitude and phase, which causes mechanical and electrical stress to the devices connected to the network, sometimes leading to permanent damage.

Excitation of the sub-synchronous resonance by doubly-fed generators is described for example in Jindal, A., Irwin, G. and Woodford, D.: Sub-Synchronous Interactions with Wind Farms Connected Near Series Compensated AC Lines. Proceedings of 9th International Workshop on Large-Scale Integration of Wind Power into Power Systems as well as on Transmission Networks for Offshore Wind Power Plants, Oct. 18-19, 2010, Quebec City, Canada.

However, no clear means for damping the resonance is given in the paper.

In Hughes, M., Anaya-Lara, O., Jenkins, N. and Strbac, G.: A Power System Stabilizer for DFIG-Based Wind Generation. IEEE Transactions on Power Systems, Vol. 21, No. 2, May 2006, pp. 763-772, it is proposed to measure the active power in the stator and feed the signal after high-pass filtering to the phase angle reference of the rotor converter. The problem with this approach is that when the generator speed is close to synchronous speed, the rotor voltage is very low and thus a change in its phase angle has little damping effect. For this reason it is not possible to operate the converter at this speed range if resonance exists in the network.

Document WO2006/030183A1 discloses control of a DFIG in which the rotor flux of the generator is changed so that the DFIG emulates a conventional synchronous generator.

Document Seman et al. : "Ride-Through Analysis of Doubly Fed Induction Wind-Power Generator Under Unsymmetrical Network Disturbance", IEEE TRANSACTIONS ON POWER SYSTEMS, vol. 21, no. 4, 1 November 2006 relates to operation of doubly fed induction generators during voltage dips.

BRIEF DESCRIPTION OF THE INVENTION

An object of the present invention is to provide a method and an arrangement for implementing the method so as to solve the above problems in connection with doubly-fed induction generators. The objects of the invention are achieved by a method and an arrangement which are characterized by what is stated in the independent claims. Preferred embodiments of the invention are disclosed in the dependent claims.

The invention is based on the idea of modifying a rotor flux reference in the control system controlling the rotor flux. The modified rotor flux reference is obtained by summing a damping signal to a signal that is typically used as a rotor flux reference. The modified rotor flux signal is then used in the control as the reference signal.

The damping signal is preferably formed on the basis of an estimated machine torque or another signal having similar characteristics.

An advantage of the method and arrangement is that it damps effectively sub-synchronous oscillations so that the network can be used securely and the production of power is stable.

A further advantage of the invention is that it can be used throughout the whole speed range for stabilising the operation. The method and the apparatus of the invention require minimal changes to the current control structure, thus the invention is easily implemented.

BRIEF DESCRIPTION OF THE DRAWINGS

In the following, the invention will be described in greater detail by means of preferred embodiments with reference to the accompanying drawings, in which

Figure 1 shows a simulation of network voltage oscillation with a prior art control system when sub-synchronous resonance is excited;
Figure 2 shows a control system comprising damping control according to an embodiment of the invention;
Figure 3 shows a block diagram of formation of a damping signal;

Figure 4 shows the same simulation as in Figure 1 with the damping control according to the invention; and

Figure 5 shows performance of the damping control according to the invention when a fault occurs in the grid, causing a voltage dip.

DETAILED DESCRIPTION OF THE INVENTION

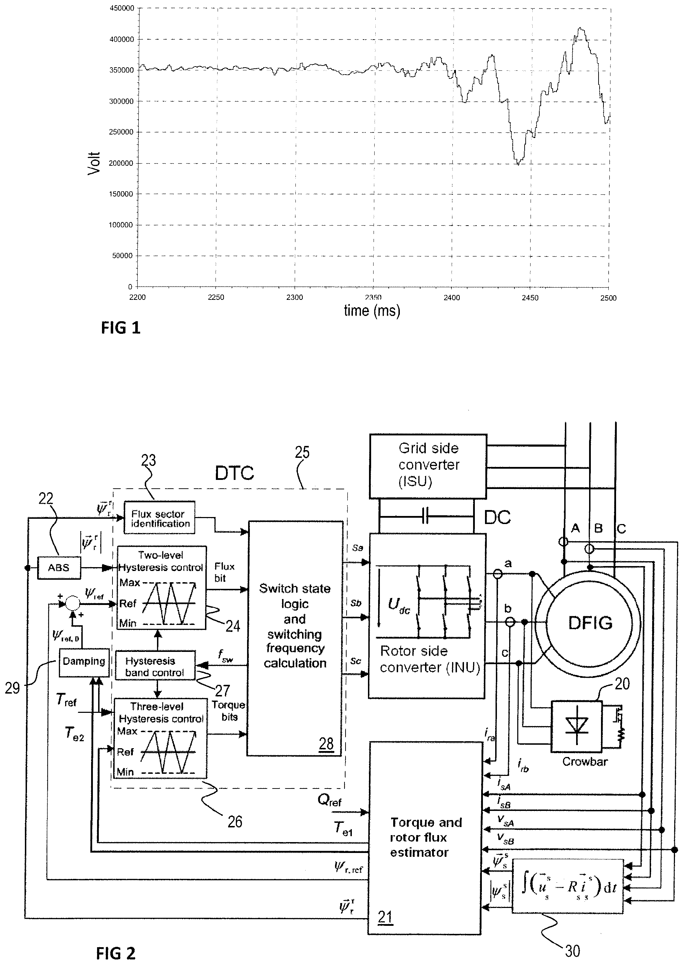

Figure 2 shows an example of a control system together with a frequency converter for controlling a doubly-fed induction generator (DFIG) according to an embodiment of the present invention. The control system in Figure 2 is based on direct torque control. The direct torque control has been found to be prone to excite subsynchronous resonances already at moderate compensation levels of a transmission line inductance.

An example of a conventional prior art direct torque controlled system is disclosed for example in US patent 6,741,059. In direct torque controlled systems, such as that in the above-mentioned US patent, the machine torque and rotor flux are controlled variables. The actual values of torque and rotor flux vector are estimated from a measured stator current vector, a measured rotor current vector, and a stator flux vector. The stator flux vector is estimated by integrating a stator voltage vector.

In Figure 2, a stator of the doubly-fed induction generator is connected to the supplied network having phases A, B, C. Further, a grid side converter (ISU) is connected to the network and to a DC intermediate circuit (DC). A rotor side converter (INU) is connected to the rotor of the DFIG having phases a, b, c. Figure 2 also shows a crowbar circuit 20 connected to the rotor circuit.

Stator currents $i_{sA}$, $i_{sB}$ and voltages $V_{sA}$, $V_{sB}$ are measured, and these values are fed to a torque and flux estimator block 21. The torque and flux estimator block 21 receives a further calculated stator flux vector

$\vec{\psi}_s^{\,s}$ , and the magnitude of the stator flux $\left|\vec{\psi}_s^{\,s}\right|$ from a stator flux calculation block 30. The stator flux is calculated from measured stator voltages, stator currents and from the stator resistance. The torque and flux estimator block 21 also receives a reactive power reference $Q_{ref}$.

The torque and rotor flux estimator block 21 estimates the torque of a machine $T_{e1}$, $T_{e2}$ and the rotor

flux $\vec{\psi}_r^{\,r}$ . The estimated torque $T_{e1}$ is fed to a three-level hysteresis control block 26 together with a torque reference $T_{ref}$. The estimated rotor flux vector is fed to a flux sector identification block 23 and to an ABS block 22 which calculates the length of the rotor flux vector and feeds it further to a two-level hysteresis control block 24 inside a DTC control block 25. The two-level hysteresis control block 24 also receives a reference for rotor flux $\psi_{ref}$.

In conventional DTC control, the flux reference $\psi_{ref}$ is obtained directly from the torque and rotor flux estimator block 21. However, in the present invention, the flux reference supplied to a DTC-modulator is a modified flux reference which is obtained by summing the reference $\psi_{r,ref}$ from the torque and rotor flux estimator 21 with a damping signal from a damping block 29. According to the embodiment of Figure 2, the damping signal is obtained using the torque reference $T_{ref}$ and the torque estimate $T_{e2}$. In the example of Figure 2, the torque estimate for damping is calculated in the estimator block 21.

The two-level hysteresis control block 24 and the three-level hysteresis control block 26 also receive input from a hysteresis band control block 27. The hysteresis band control block 27 controls the width of the hysteresis bands and thereby affects the switching frequency. Therefore, the hysteresis band control block receives input from a switch state logic and switching frequency calculation block 28 which controls the switching frequency $f_{sw}$. The hysteresis control blocks output a flux bit and torque bits for the switch state logic block 28 which also receives information on the sector of the rotor flux from the flux sector identification block 23.

The switch state logic and switching frequency calculation block 28 outputs switching instructions $S_a$, $S_b$, $S_c$ to the rotor side converter.

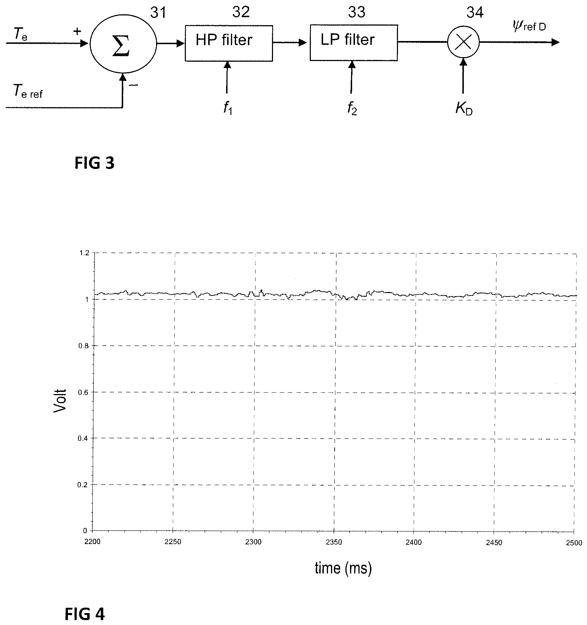

As mentioned above, the modified rotor flux reference is used in the modulator. Figure 3 shows an example of calculation of this modified signal. The torque reference $T_{e\,ref}$ is subtracted 31 from the torque estimate $T_e$. The result of this subtraction is both high-pass filtered 32 and low-pass filtered 33 for removing possible offset and high frequency noise from the difference signal. The filtered signal is further multiplied with an amplification factor $K_D$ which can be used for defining a correct magnitude for the damping signal that is added to the flux reference as shown in Figure 2. It is clear that the low-pass filter and the high-pass filter can be combined to form a band-pass filter.

If necessary, a suitable phase shift adjustment may also be used in addition to amplification adjustment to further enhance the damping. The phase shift adjustment can be incorporated into the filtering section.

Once the modified rotor flux reference is used instead of one obtained directly from the torque and rotor flux estimator, the oscillations are greatly reduced. The modified rotor flux reference is proportional to the torque oscillations which are due to the voltage oscillations in the grid.

Instead of using torque for generating the damping signal as shown in Figures 2 and 3, other signals may also be used. Signals containing oscillation and thereby being usable in damping oscillations include estimated stator power and measured DC intermediate link voltage, i.e. DC bus voltage. As the oscillations are reflected to these signals, they are also usable in compensation. If for example a measured DC link voltage is used, it can be subtracted from the DC voltage reference and the procedure would be the same as that in Figure 3 in connection with torques.

The invention is described above in connection with Figure 2 with a control system based on direct torque control (DTC). However, the invention is not limited to DTC. Other control schemes to which the method is applicable include vector control, in which the flux is estimated using a motor model and the flux is used as a feedback variable. The flux reference is modified in a manner similar to that used in connection with Figure 2 in different control system.

The estimated torque Te in Figure 2 may be estimated in several ways, some of which being listed here below.

$$T_{est} = \frac{1}{siglm} \operatorname{Im}\left\{\Psi_{stator}^{*} * \Psi_{rotor}\right\}$$

$$T_{est} = L_m \operatorname{Im}\left\{\Psi_{stator}^{*} * i_s\right\}$$

$$T_{est} = L_m \operatorname{Im}\left\{i_r^{*} * i_s\right\}$$

$$T_{est} = -\operatorname{Im}\left\{\Psi_{rotor}^{*} * i_r\right\}$$

The torque can thus be estimated using stator and rotor fluxes $\psi_{stator}$, $\psi_{rotor}$, stator and rotor currents $i_s$, $i_r$, and magnetizing inductance $L_m$ in different ways.

The estimated torque used by the damping block 29 and the estimated torque fed to the torque controller 26 may be calculated differently from each other. The torque used for torque control may preferably be calculated using only the positive sequence component of the flux and/or current. In Figure 2 it is shown that the same torque signal is fed to both blocks 26 and 29.

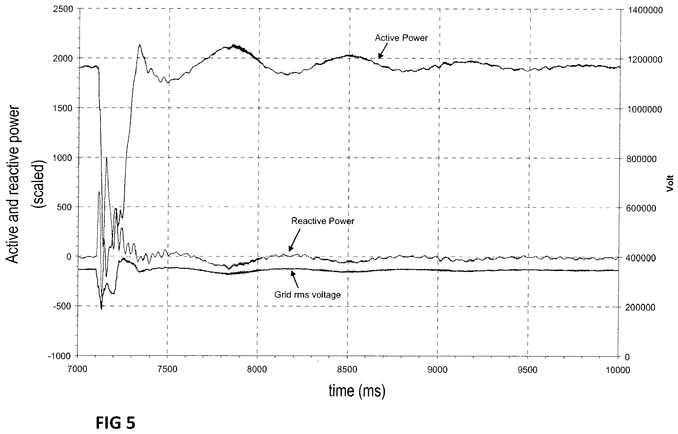

Using the damping means according to the invention ensures a stable operation of the AC power network even during and after faults as can be seen in Figures 4 and 5. Figure 4 shows a simulated voltage waveform. In Figure 4, the same simulation is carried out as in connection with Figure 1. The stable waveform of Figure 4 is enabled by the method of the invention used in the simulation. It can be seen that the voltage waveform contains no oscillation.

In Figure 5, a situation is simulated in which the voltage of the network collapses. The simulated waveforms show that once the voltage of the network is recovered, the active power stabilizes quickly. During the fault, the system feeds reactive power to the network for supporting the voltage.

**Claims**

**1.** A method of controlling a doubly-fed induction machine (DFIG) by a frequency converter comprising a rotor side converter (INU) connected to a rotor circuit of the doubly-fed induction machine (DFIG) and having a control system with rotor flux as a feedback variable,
a grid side converter (ISU) connected to an AC power network, and a direct voltage intermediate circuit (DC) connected between the rotor side converter (INU) and the grid side converter (ISU), and wherein the stator of the doubly-fed induction machine (DFIG) is connected to the AC power network, which method comprises
forming a rotor flux reference ($\psi_{r,ref}$), the rotor flux reference and the rotor flux used as feedback variable being estimated, **characterized in that** the method comprises
forming a damping signal ($\psi_{ref,D}$), the damping signal being proportional to oscillation in an estimated torque, oscillation in estimated stator power or oscillation in a measured intermediate DC circuit voltage, and the damping signal ($\psi_{ref,D}$) being obtained from an oscillating signal by filtering it with low-pass and high-pass filters or a band-pass filter,
summing the damping signal ($\psi_{ref,D}$) and the rotor flux reference ($\psi_{r,ref,}$) for obtaining a modified rotor flux reference ($\psi_{ref}$), and
feeding the modified rotor flux reference (($\psi_{ref}$) to a controller (25) of the rotor side converter (INU) for damping sub-synchronous resonances.

**2.** A method according to claim 1, **characterized in that** the control system is based on direct torque control.

**3.** A method according to claim 1, **characterized in that** the control system is based on vector control.

**4.** A method according to any one of the previous claims 1 to 3, **characterized in that** a damping signal ($\psi_{ref,D}$) amplitude can be adjusted.

**5.** A method according to any one of the previous claims 1 to 3, **characterized in that** a damping signal ($\psi_{ref,D}$) phase can be adjusted.

**6.** An arrangement for controlling a doubly-fed induction machine (DFIG) with a frequency converter comprising
a rotor side converter (INU) connected to a rotor circuit of the doubly-fed induction machine (DFIG) and having a control system with rotor flux as a feedback variable,
a grid side converter (ISU) connected to an AC power network, and a direct voltage intermediate circuit (DC) connected between the rotor side converter (INU) and the grid side converter (ISU), and wherein the stator of the doubly-fed induction machine (DFIG) is connected to the AC power network, which arrangement comprises

means for forming a rotor flux reference ($\psi_{r,ref}$), the rotor flux reference and the rotor flux used as feedback variable being estimated, **characterized in that** the arrangement comprises

means for forming a damping signal ($\psi_{ref,D}$), the damping signal being proportional to oscillation in an estimated torque, oscillation in estimated stator power or oscillation in a measured intermediate DC circuit voltage, and the damping signal ($\psi_{ref,D}$) being obtained from an oscillating signal by filtering it with low-pass and high-pass filters or a band-pass filter, means for summing the damping signal ($\psi_{ref,D}$) and the rotor flux reference ($\psi_{r,ref}$) for obtaining a modified rotor flux reference ($\psi_{ref}$), and

means for feeding the modified rotor flux reference ($\psi_{ref}$) to a controller (25) of the rotor side converter (INU) for damping sub-synchronous resonances.

7. An arrangement according to claim 6, **characterized in that** the control system is based on direct torque control.

8. An arrangement according to claim 6, **characterized in that** the control system is based on vector control.

**Patentansprüche**

1. Verfahren zum Steuern einer doppelt gespeisten Asynchronmaschine (DFIG) durch einen Frequenzumrichter, der einen Rotorseitenumrichter (INU) umfasst, der an eine Rotorschaltung der doppelt gespeisten Asynchronmaschine (DFIG) angeschlossen ist und ein Steuersystem mit Rotorfluss als Feedbackvariable hat,

einen Stromnetzseitenumrichter (ISU), der an ein Wechselstromnetz angeschlossen ist, und eine Gleichspannungszwischenschaltung (DC), die zwischen dem Rotorseitenumrichter (INU) und dem Stromnetzseitenumrichter (ISU) angeschlossen ist, und wobei der Stator der doppelt gespeisten Asynchronmaschine (DFIG) an das Wechselstromnetz angeschlossen ist, wobei das Verfahren Folgendes umfasst

Bilden einer Rotorflussreferenz ($\psi_{r,ref}$), wobei die Rotorflussreferenz und der Rotorfluss als Feedbackvariable, die geschätzt wird, verwendet werden, **dadurch gekennzeichnet, dass** das Verfahren Folgendes umfasst

Bilden eines Dämpfungssignals ($\psi_{ref,D}$), wobei das Dämpfungssignal zur Schwingung eines geschätzten Drehmoments, Schwingung einer geschätzten Statorleistung oder Schwingung einer gemessenen Spannung der Gleichspannungszwischenschaltung proportional ist, und das Dämpfungssignal ($\psi_{ref,D}$) von einem Schwingungssignal durch dessen Filtern mit Tiefpass- und Hochpassfiltern oder einem Bandpassfilter erhalten wird,

Summieren des Dämpfungssignals ($\psi_{ref,D}$) und der Rotorflussreferenz ($\psi_{r,ref}$), um eine modifizierte Rotorflussreferenz ($\psi_{ref}$) zu erhalten, und Speisen der modifizierten Rotorflussreferenz ($\psi_{ref}$) zu einer Steuervorrichtung (25) des Rotorseitenumrichters (INU) zum Dämpfen subsynchroner Resonanzen.

2. Verfahren nach Anspruch 1, **dadurch gekennzeichnet, dass** das Steuersystem auf direkter Drehmomentsteuerung basiert.

3. Verfahren nach Anspruch 1, **dadurch gekennzeichnet, dass** das Steuersystem auf Vektorsteuerung basiert.

4. Verfahren nach einem der vorhergehenden Ansprüche 1 bis 3, **dadurch gekennzeichnet, dass** eine Dämpfungssignal ($\psi_{ref,D}$)-Amplitude angepasst werden kann.

5. Verfahren nach einem der vorhergehenden Ansprüche 1 bis 3, **dadurch gekennzeichnet, dass** eine Dämpfungssignal ($\psi_{ref,D}$)-Phase angepasst werden kann.

6. Anordnung zum Steuern einer doppelt gespeisten Asynchronmaschine (DFIG) mit einem Frequenzumrichter, die Folgendes umfasst

einen Rotorseitenumrichter (INU), der an eine Rotorschaltung der doppelt gespeisten Asynchronmaschine (DFIG) angeschlossen ist und ein Steuersystem mit Rotorfluss als eine Feedbackvariable hat,

einen Stromnetzseitenumrichter (ISU), der an ein Wechselstromnetz angeschlossen ist, und eine Gleichspannungszwischenschaltung (DC), die zwischen dem Rotorseitenumrichter (INU) und dem Stromnetzseitenumrichter (ISU) angeschlossen ist, und wobei der Stator der doppelt gespeisten Asynchronmaschine (DFIG) an das Wechselstromnetz angeschlossen ist, wobei die Anordnung Folgendes umfasst

Mittel zum Bilden einer Rotorflussreferenz ($\psi_{r,ref}$), wobei die Rotorflussreferenz und der Rotorfluss als Feedbackvariable, die geschätzt wird, verwendet werden, **dadurch gekennzeichnet, dass** die Anordnung Folgendes umfasst

Mittel zum Bilden eines Dämpfungssignals ($\psi_{ref,D}$), wobei das Dämpfungssignal zur Schwingung eines geschätzten Drehmoments, Schwingung einer geschätzten Statorleistung oder Schwingung einer gemessenen Spannung der Gleichspannungszwischenschaltung proportional ist, und das Dämpfungssignal ($\psi_{ref,D}$) von einem Schwingungssignal durch dessen Filtern mit Tiefpass- und Hochpassfiltern oder einem Bandpassfilter erhalten wird,

Mittel zum Summieren des Dämpfungssignals ($\psi_{ref,}$

$_D$) und der Rotorflussreferenz ($\psi_{r,\,ref}$) zum Erhalten einer modifizierten Rotorflussreferenz ($\psi_{ref}$), und Mittel zum Speisen der modifizierten Rotorflussreferenz ($\psi_{ref}$) zu einer Steuervorrichtung (25) des Rotorseitenumrichters (INU) zum Dämpfen subsynchroner Resonanzen.

7. Anordnung nach Anspruch 6, **dadurch gekennzeichnet, dass** das Steuersystem auf direkter Drehmomentsteuerung basiert.

8. Anordnung nach Anspruch 6, **dadurch gekennzeichnet, dass** das Steuersystem auf Vektorsteuerung basiert.

## Revendications

1. Procédé de commande d'une machine à induction à double alimentation (DFIG) par un convertisseur de fréquence comprenant :

   un convertisseur côté rotor (INU) connecté à un circuit de rotor de la machine à induction à double alimentation (DFIG) et comportant un système de commande avec un flux de rotor en tant que variable de rétroaction,
   un convertisseur côté réseau électrique (ISU) connecté à un réseau de puissance alternative, et
   un circuit intermédiaire de tension continue (DC) connecté entre le convertisseur côté rotor (INU) et le convertisseur côté réseau électrique (ISU), et dans lequel le stator de la machine à induction à double alimentation (DFIG) est connecté au réseau de puissance alternative, lequel procédé comprend :

      la formation d'une référence de flux de rotor ($\psi_{r,ref}$), la référence de flux de rotor et le flux de rotor utilisé en tant que variable de rétroaction étant estimés, **caractérisé en ce que** le procédé comprend :

         la formation d'un signal d'amortissement ($\psi_{ref,D}$), le signal d'amortissement étant proportionnel à l'oscillation d'un couple estimé, l'oscillation de la puissance de stator estimée ou l'oscillation d'une tension de circuit continue intermédiaire mesurée, et le signal d'amortissement ($\psi_{ref,D}$) étant obtenu à partir d'un signal oscillant en le filtrant avec des filtres passe-bas et passe-haut ou un filtre passe-bande,
         la sommation du signal d'amortissement ($\psi_{ref,D}$) et de la référence de flux de rotor ($\psi_{r,ref}$) pour obtenir une référence de flux de rotor modifiée ($\psi_{ref}$), et la fourniture de la référence de flux de rotor modifiée ($\psi_{ref}$) à un contrôleur (25) du convertisseur côté rotor (INU) pour amortir les résonances sous-synchrones.

2. Procédé selon la revendication 1, **caractérisé en ce que** le système de commande est basé sur une commande de couple directe.

3. Procédé selon la revendication 1, **caractérisé en ce que** le système de commande est basé sur une commande vectorielle.

4. Procédé selon l'une quelconque des revendications 1 à 3 précédentes, **caractérisé en ce qu'**une amplitude du signal d'amortissement ($\psi_{ref,D}$) peut être ajustée.

5. Procédé selon l'une quelconque des revendications 1 à 3 précédentes, **caractérisé en ce qu'**une phase du signal d'amortissement ($\psi_{ref,D}$) peut être ajustée.

6. Agencement pour commander une machine à induction à double alimentation (DFIG) avec un convertisseur de fréquence comprenant :

   un convertisseur côté rotor (INU) connecté à un circuit de rotor de la machine à induction à double alimentation (DFIG) et comportant un système de commande avec un flux de rotor en tant que variable de rétroaction,
   un convertisseur côté réseau électrique (ISU) connecté à un réseau de puissance alternative, et
   un circuit intermédiaire de tension continue (DC) connecté entre le convertisseur côté rotor (INU) et le convertisseur côté réseau électrique (ISU), et dans lequel le stator de la machine à induction à double alimentation (DFIG) est connecté au réseau de puissance alternative, lequel agencement comprend :

      des moyens pour former une référence de flux de rotor (($\psi_{ref,D}$), la référence de flux de rotor et le flux de rotor utilisé en tant que variable de rétroaction étant estimés, **caractérisé en ce que** l'agencement comprend :

         des moyens pour former un signal d'amortissement ($\psi_{ref,D}$), le signal d'amortissement étant proportionnel à l'oscillation d'un couple estimé, l'oscillation de la puissance de stator estimée ou l'oscillation d'une tension de circuit continue intermédiaire mesurée, et le signal d'amortissement ($\psi_{ref,D}$) étant obtenu à partir d'un signal oscillant en le filtrant avec des filtres passe-bas et passe-haut ou un filtre passe-bande,

des moyens pour sommer le signal d'amortissement ($\psi_{ref,D}$) et la référence de flux de rotor ($\psi_{r,ref}$) pour obtenir une référence de flux de rotor modifiée ($\psi_{ref}$), et

des moyens pour fournir la référence de flux de rotor modifiée ($\psi_{ref}$) à un contrôleur (25) du convertisseur côté rotor (INU) pour amortir les résonances sous-synchrones.

7. Agencement selon la revendication 6, **caractérisé en ce que** le système de commande est basé sur une commande de couple directe.

8. Agencement selon la revendication 6, **caractérisé en ce que** le système de commande est basé sur une commande vectorielle.

**FIG 1**

**FIG 2**

FIG 3

FIG 4

**FIG 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006030183 A1

- US 6741059 B

### Non-patent literature cited in the description

- **JINDAL, A. ; IRWIN, G. ; WOODFORD, D.** Sub-Synchronous Interactions with Wind Farms Connected Near Series Compensated AC Lines. *Proceedings of 9th International Workshop on Large-Scale Integration of Wind Power into Power Systems as well as on Transmission Networks for Offshore Wind Power Plants,* 18 October 2010

- **HUGHES, M. ; ANAYA-LARA, O. ; JENKINS, N. ; STRBAC, G.** A Power System Stabilizer for DFIG-Based Wind Generation. *IEEE Transactions on Power Systems,* May 2006, vol. 21 (2), 763-772
- **SEMAN et al.** Ride-Through Analysis of Doubly Fed Induction Wind-Power Generator Under Unsymmetrical Network Disturbance. *IEEE TRANSACTIONS ON POWER SYSTEMS,* 01 November 2006, vol. 21 (4